# EUROPÄISCHE PATENTANMELDUNG

(11) **EP 1 970 648 A2**
(43) Veröffentlichungstag der Anmeldung: **17.09.2008**
(21) Anmeldenummer: 08004313.6
(22) Anmeldetag: 08.03.2008
(51) Int. Cl.: F25B 30/04

(54) **Verfahren zum Betrieb einer Adsorptions-Wärmepumpe**

(30) Priorität: 12.03.2007 AT 3842007
(71) Anmelder: Vaillant GmbH, 42859 Remscheid (DE)
(72) Erfinder: Burgdorf, Achim, 42929 Wermelskirchen (DE); Lang, Rainer, 51519 Odenthal (DE); Marth, Frank, 56581 Melsbach (DE); Marx, Uwe, 51375 Leverkusen (DE); Wienen, Johann, 46359 Heiden (DE)
(74) Vertreter: Hocker, Thomas

(57) **Zusammenfassung**

Eine Adsorptions-Wärmepumpe mit mindestens einer Wärmequelle (2) für die Desorption und einer Wärmesenke (3) zumindest für die Aufnahme der Adsorptionswärme verfügt die Wärmepumpe über genau ein oder mehrere im parallelen Arbeitstakt betriebene Wärmepumpen-Module (12), in denen sich zumindest ein Adsorber/Desorber (1) und ein Verdampfer/Kondensator (13) befinden. Zwischen dem Adsorber/Desorber (1) und dem Verdampfer/Kondensator (13) befindet sich in dem oder den Wärmepumpen-Modulen (12) kein Absperrorgan.

## Beschreibung

Die Erfindung bezieht sich auf eine Adsorptions-Wärmepumpe sowie ein Verfahren zum betreiben derselben.

Bei Adsorptions-Wärmepumpen wird ein von einer Umweltwärmequelle verdampftes Kältemittel von einem Adsorber adsorbiert, wodurch dieser sich bei der Adsorption erhitzt. Diese Wärme wird als Nutzwärme abgeführt. Anschließend muss das Kältemittel bei der Desorption wieder aus dem Adsorber, der dann als Desorber fungiert, durch Wärmezufuhr ausgetrieben werden. Das Kältemittel kondensiert an einem Kondensator, der wiederum die Wärme als Nutzwärme abgibt.

Der Adsorber / Desorber strebt stets einen Gleichgewichtszustand an. Ein trockener Adsorber wird daher immer so viel Kältemittel aufnehmen, bis er sich im Gleichgewichtszustand befindet.

Die DE 101 34 699 C2 offenbart eine Adsorptions-Wärmepumpe mit zwei Wärmepumpen-Modulen. Vorteilhaft hierbei ist, dass kontinuierlich Umweltwärme genutzt werden kann. Wird der Betrieb der Wärmepumpe abgeschaltet, so ist stets ein Adsorber / Desorber derart weit desorbiert, dass er anschließend - um in den Gleichgewichtszustand zu gelangen - Kältemittel aufsaugt und die daraus entstehende Adsorptionswärme ungenutzt bleibt. Dies verringert im realen Betrieb den Wirkungsgrad in nennenswertem Maße.

Aus der DE 10 2004 049 408 B4 ist eine Vakuum-Sorptionsvorrichtung bekannt, bei welcher der Adsorber/Desorber durch ein Verschlusselement mechanisch von dem Verdampfer getrennt werden kann. Hierdurch wird verhindert, dass nach dem Abschalten der Anlage Kältemittel zum Adsorber / Desorber gelangt und somit Sorptionswärme ungenutzt frei wird. Auch die DE 10 2004 049 411 A1 zeigt eine Vakuum-Sorptionsvorrichtung mit einem Verschlusselement zwischen dem Adsorber/Desorber und dem Verdampfer. Verschlusselemente in einer derartigen Sorptionsvorrichtung müssen besonderen Anforderungen genügen. Es dürfen keine Schmierstoffe in die Sorptionsvorrichtung gelangen, da die Funktion des Sorbers durch Fremdstoffe massiv beeinträchtigt wird. Der Antrieb des Verschlusselementes muss wartungsfrei sein, da ein Austausch von Teilen nur mit erheblichem Aufwand möglich ist.

Aus WO 03/087682 A1 ist eine Wärmepumpe mit einem einzelnen Wärmepumpenmodul, bestehend aus einem Adsorber / Desorber und einem Verdampfer / Kondensator, bekannt. Es ist in der Schrift beschrieben, wann idealerweise von der Adsorptionsphase in die Desorptionsphase und umgekehrt umgeschaltet wird. Es ist nicht bekannt, wie mit möglichst geringen Verlusten die Anlage zumindest vorübergehend abgeschaltet wird.

Aufgabe der vorliegenden Erfindung ist es, ein Verfahren zum Betrieb einer Adsorptionswärmepumpe zu schaffen, welche sich durch einfachen und robusten Aufbau auszeichnet und dabei einen verlustfreien Betrieb ermöglicht.

Dies wird dadurch erreicht, dass die Adsorptionswärmepumpe über ein Wärmepumpenmodul, in dem sich zumindest ein Adsorber/Desorber und ein Verdampfer/Kondenstor befindet, verfügt und in diesem Wärmepumpenmodul zwischen dem Adsorber/Desorber und dem Verdampfer/Kondensator kein Absperrorgan vorhanden ist. Es kann auch erfindungsgemäß vorgesehen sein, dass mehrere Wärmepumpenmodule vorhanden sind, die jedoch alle im parallelen Arbeitstakt betrieben werden. Dies bedeutet, dass die Wärmepumpenmodule gleichzeitig die Adsorption starten, als auch beenden. Die Desorption beginnt und endet auch jeweils zu den gleichen Zeitpunkten. Dadurch, dass kein Absperrorgan zwischen Adsorber und Desorber vorhanden ist, kann auch kein solches für eine Verunreinigung des Wärmetauschermoduls sorgen oder ausfallen. Auch wird ein Verschleiß von bewegten Teilen durch diese Art des Wärmetauschermoduls vermieden.

Wird eine Adsorptionswärmepumpe mit lediglich einem Wärmepumpenmodul betrieben, so kann die Wärmepumpe derart abgeschaltet werden, dass keine Adsorptionswärme ungenutzt verloren geht. Demzufolge soll die Abschaltung der Wärmepumpe stets nur nach Beendigung der Adsorption erfolgen. Der Adsorber ist dann gesättigt und nimmt nach dem Abschalten kein weiteres Kältemittel auf, wodurch keine weitere Adsorptionswärme entsteht. Demzufolge mindern keine Verluste den Wirkungsgrad der Adsorptionswärmepumpe.

Erfindungsgemäß können auch mehrere Module im parallelen Arbeitstakt betrieben werden. Hierdurch ist ebenfalls gewährleistet, dass die gesamte Anlage derart abgeschaltet werden kann, dass alle Adsorber gesättigt sind. Gerade hier ist ein deutlicher Vorteil gegenüber den Wärmepumpen mit mehreren Modulen gemäß dem Stand der Technik zu sehen, bei denen stets ein Modul derart abgeschaltet wird, dass weiterhin Adsorptionswärme entsteht und ungenutzt in die Umgebung gelangt.

Der Adsorber/Desorber und die Wärmesenke der Wärmepumpe können wechselweise parallel oder in Reihe geschaltet werden. Es ist auch möglich, den Durchgang durch den Adsorber/Desorber völlig zu sperren, während der Paralleldurchgang durch die Wärmesenke geöffnet ist. Hierdurch ist es möglich bei der Desorption den Adsorber und die Wärmesenke parallel zu schalten. Werden hierbei regelbare Ventile oder regelbare Pumpen eingesetzt, so kann der Durchfluss durch den Adsorber/Desorber als auch die Wärmesenke individuell variiert werden, sodass der Desorptionsprozess und die Gesamtwärmeabgabe der Wärmepumpenanlage gezielt beeinflusst werden kann. Während der Adsorption werden der Adsorber/Desorber und die Wärmesenke in Reihe geschaltet. Die Vorrichtung ermöglicht es ferner, einen Direktheizbetrieb ohne Betrieb des Adsorber/Desorbers zu betreiben. Hierzu wird der Durchgang durch den Adsorber/Desorber gesperrt, während der parallele Durchgang für die Wärmesenke geöffnet wird. Somit findet ein direkter Übergang der thermischen Energie von der Wärmequelle zur Wärmesenke statt.

Die Erfindung wird nun anhand der folgenden Figuren detailliert erläutert. Hierbei zeigen
Figuren 1 bis 3 eine erste Variante einer erfindungsgemäßen Wärmepumpe in verschiedenen Betriebszuständen,
Figuren 4 bis 6 eine Variante der erfindungsgemäßen Wärmepumpe ebenfalls in den unterschiedlichen Betriebszuständen sowie
Figuren 7 bis 9 eine dritte Variante einer erfindungsgemäßen Wärmepumpe in verschiedenen Betriebszuständen.

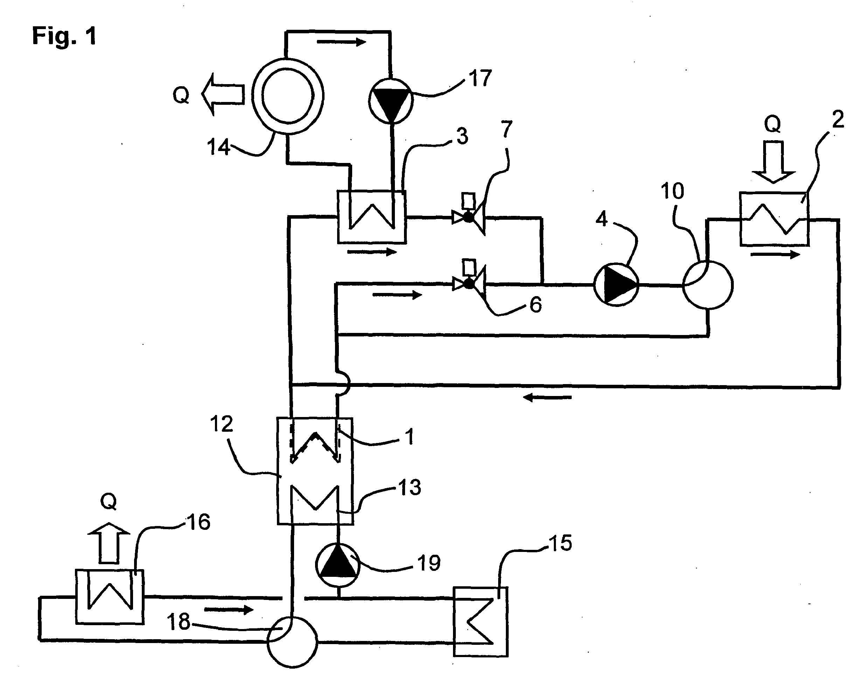

Figur 1 zeigt eine erfindungsgemäße Wärmepumpe mit einem Wärmepumpenmodul 12, in dem sich ein Adsorber/Desorber 1 sowie ein Verdampfer/Kondensator 13 befinden. Der Adsorber/Desorber 1 verfügt über zwei Ein- beziehungsweise Ausgänge. Der eine ist mit einer Wärmesenke 3 und einer Wärmequelle 2 verbunden, der andere Ein-/Ausgang ist über ein regelbares Ventil 6 mit einer regelbaren Pumpe 4 verbunden. Die Wärmesenke 3 ist mit einem Verbraucher 14 über eine Pumpe 17 hydraulisch verbunden. Als Verbraucher 14 dient eine Raumheizung und / oder Brauchwasserbereitung. Die Wärmesenke 3 ist über ein regelbares Ventil 7 mit zuvor genannter regelbarer Pumpe 4 verbunden. Stromab der regelbaren Pumpe 4 befindet sich ein Umschaltventil 10. Das Umschaltventil 10 kann entweder die regelbare Pumpe 4 mit der Wärmequelle 2 oder mit dem Ein-/Ausgang des Adsorbers/Desorbers 1, welcher mit dem regelbaren Ventil 6 verbunden ist, verbinden. Der Verdampfer/Kondensator 13 ist über ein Umschaltventil 18 und eine Pumpe 19 entweder mit einer Umweltwärmequelle 15 oder einem Verbraucher 16 verbunden.

Figur 1 zeigt die Wärmepumpe in dem Betriebszustand, in dem sich das Wärmepumpenmodul 12 in der Desorptionsphase befindet; der Adsorber/Desorber 1 ist demnach zunächst mit Kältemittel befüllt. Aus der Wärmequelle 2, bei der es sich um ein konventionelles Heizgerät handeln kann, strömt ein Fluid zu dem einen Eingang des Adsorber/Desorbers 1. Dort wird das Fluid aufgeteilt. Einerseits durchströmt es den Adsorber/Desorber 1 und erhitzt diesen, wodurch das Kältemittel aus dem Adsorber/Desorber 1 ausgetrieben wird und zu dem Verdampfer/Kondensator 13 strömt. Das abgekühlte Fluid strömt durch den zweiten Ein-/Auslass des Adsorbers/Desorbers 1 zu dem regelbaren Ventil 6 und von diesem zur regelbaren Pumpe 4. Der Fluidteilstrom, welcher vor dem Adsorber/Desorber 1 aufgeteilt wurde, durchströmt die Wärmesenke 3 und gibt dort Energie auf einen Verbraucher 14 in Form einer Heizwasser- oder Brauchwasseraufbereitung ab. Anschließend strömt das abgekühlte Fluid durch das regelbare Ventil 7 zur regelbaren Pumpe 4, wo das Fluid zusammen mit dem anderen Fluidteilstrom wieder verbunden wird. Stromauf der regelbaren Pumpe 4 durchströmt das Fluid das Umschaltventil 10 in Richtung der Wärmequelle 2, wo das Fluid wieder erhitzt wird, um anschließend zur Desorption bzw. zur Heiz- und Brauchwasserbereitung weitergeleitet wird.

Das Kältemittel, welches aus dem Adsorber/Desorber bei der Desorption ausgetrieben wurde, kondensiert am Verdampfer/Kondensator 13, welcher als Kondensator agiert. Die gewonnenen Wärme wird mit Hilfe der Pumpe 19 zum Verbraucher 16 geleitet. In der Regel dient der Verbraucher 16 auch der Beheizung des Brauchwasser- oder Heizwasserkreislaufs.

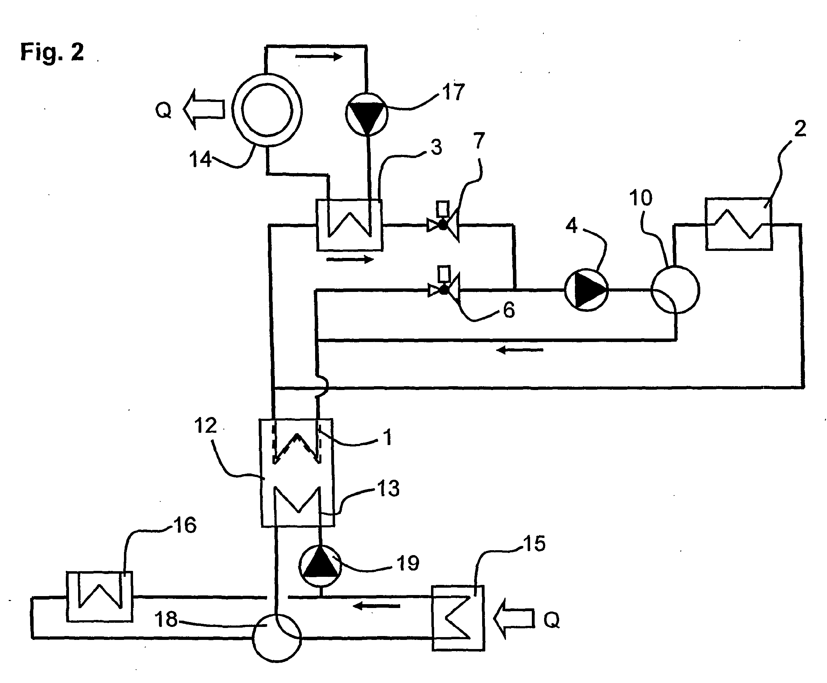

Figur 2 zeigt dieselbe Adsorptionswärmepumpe während der Adsorptionsphase. Der Adsorber/Desorber 1 agiert nun als Adsorber; in der Ausgangslage ist er trocken. Umweltwärme wird über die Umweltwärmequelle 15 dem Verdampfer/Kondensator 13, welcher als Verdampfer agiert, zugeführt. Der Verdampfer 13 verdampft Kältemittel in dem Wärmepumpenmodul 12. Dieses strömt zu dem Adsorber/Desorber 1, welcher als Adsorber fungiert. Die freigewordene Wärme wird vom Adsorber 1 zur Wärmesenke 3 geführt und von dort auf einen Heiz- oder Brauchwasserkreislauf weitergeführt. Das abgekühlte Fluid gelangt durch das regelbare Ventil 7 zur regelbaren Pumpe 4 und von dort in das Umschaltventil 10, welches nun nicht zur Wärmequelle 2, sondern vielmehr zu dem anderen Eingang des Adsorber/Desorbers 1 geleitet wird. Das regelbare Ventil 6 ist hierbei geschlossen.

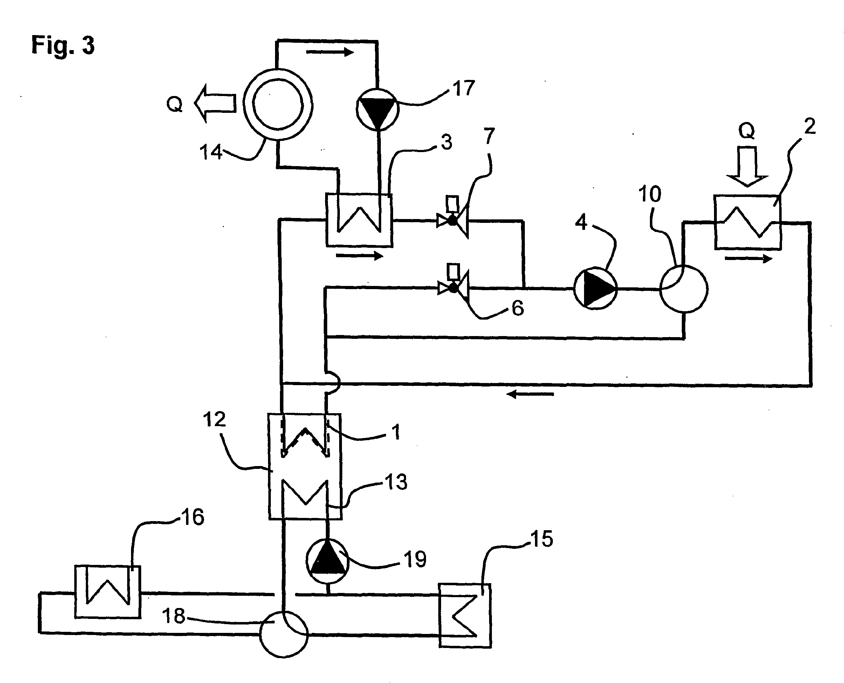

Figur 3 zeigt die Wärmepumpe im Direktheizbetrieb. Der Adsorber/Desorber 1 wird hierbei überbrückt. Somit gelangt die Wärme, die in der Wärmequelle 2 auf das Fluid gegeben wird, direkt in die Wärmesenke 3, von dort über das regelbare Ventil 7 zur regelbaren Pumpe 4 und über das Umschaltventil 10, das nun wieder mit der Wärmequelle 2 verbunden ist, zur Ausgangsposition. Das regelbare Ventil 6 ist auch hierbei geschlossen.

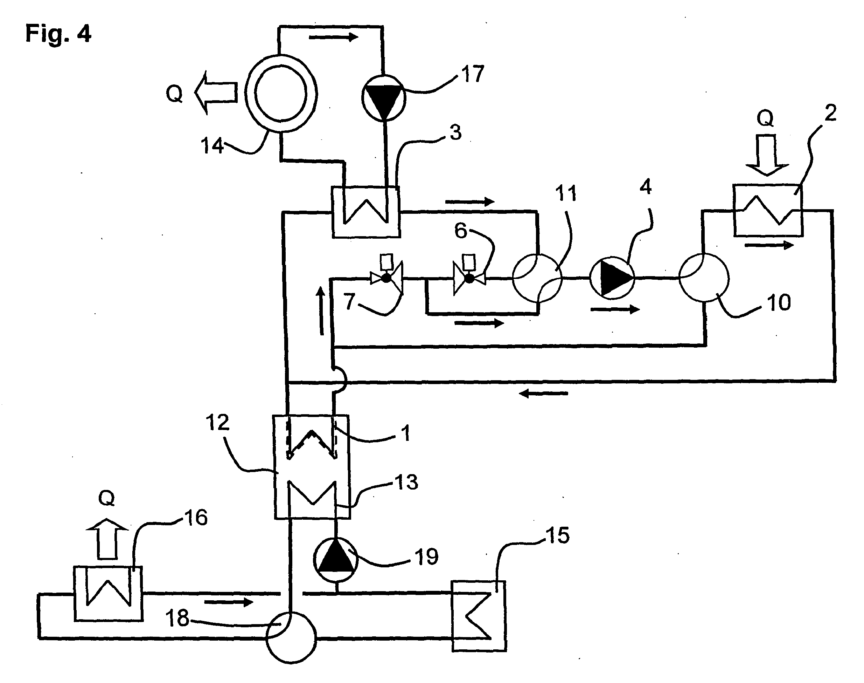

Die erfindungsgemäße Variante gemäß der Figuren 4 bis 6 unterscheidet sich von der zuvor beschriebenen Variante gemäß Figur 1 bis 3 dadurch, dass stromauf der regelbaren Pumpe 4 ein weiteres Umschaltventil 11 angeordnet ist. Bei der Desorption wird - wie bei der zuvor beschriebenen Anlage - das in der Wärmequelle 2 erhitzte Fluid parallel durch den Adsorber/Desorber 1, als auch die Wärmesenke 2 geführt. Die jeweiligen Volumenströme werden durch die regelbaren Ventile 6, 7 aufeinander abgestimmt.

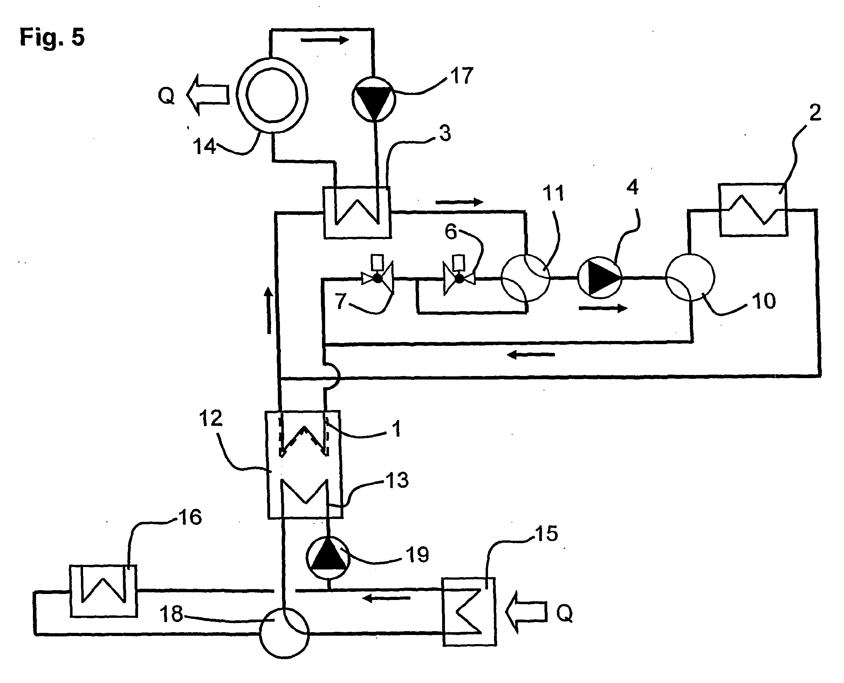

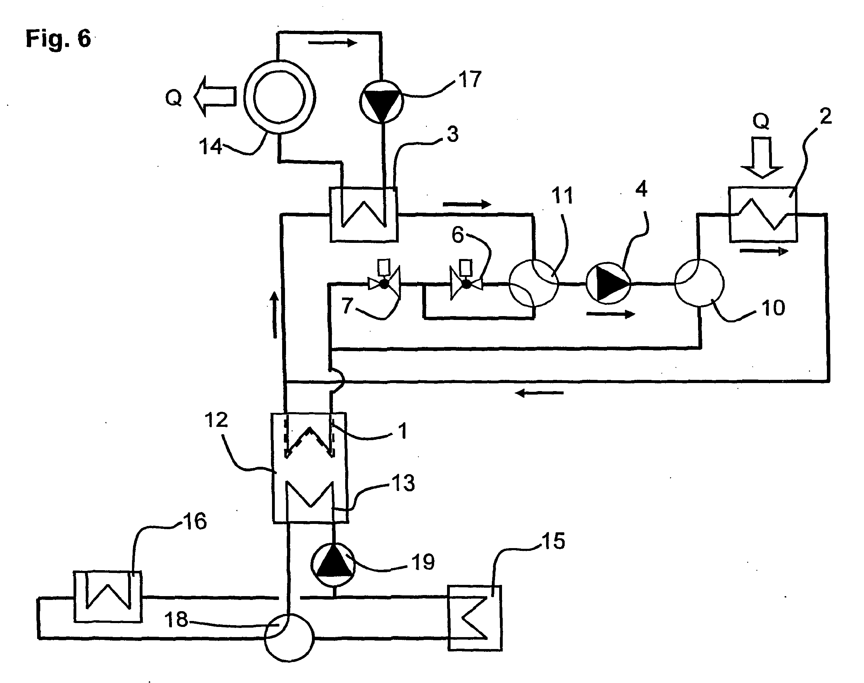

Figur 5 zeigt, dass bei der Adsorption das Umschaltventil 11 derart umgeschaltet wird, dass die Leitung parallel der Wärmesenke 3 nicht mehr durchströmt wird. Somit kommt es nicht mehr darauf an, dass - wie bei Figur 2 - das regelbare Ventil 6 geschlossen wird. Dieses kann ebenso wie das regelbare Ventil 7 geöffnet bleiben oder auch geschlossen werden, was für die Funktion unerheblich ist. Der Direktheizbetrieb gemäß Figur 6 unterscheidet sich von der Adsorptionsphase bezüglich der Verschaltung dadurch, dass das Umschaltventil 10 von der regelbaren Pumpe 4 zur Wärmequelle 2 geschaltet wird. Die Wärmequelle 2 erwärmt das Fluid in dem Leitungssystem, welches den Adsorber/Desorber 1 nicht durchströmt, sondern direkt zu der Wärmesenke 3 geleitet wird.

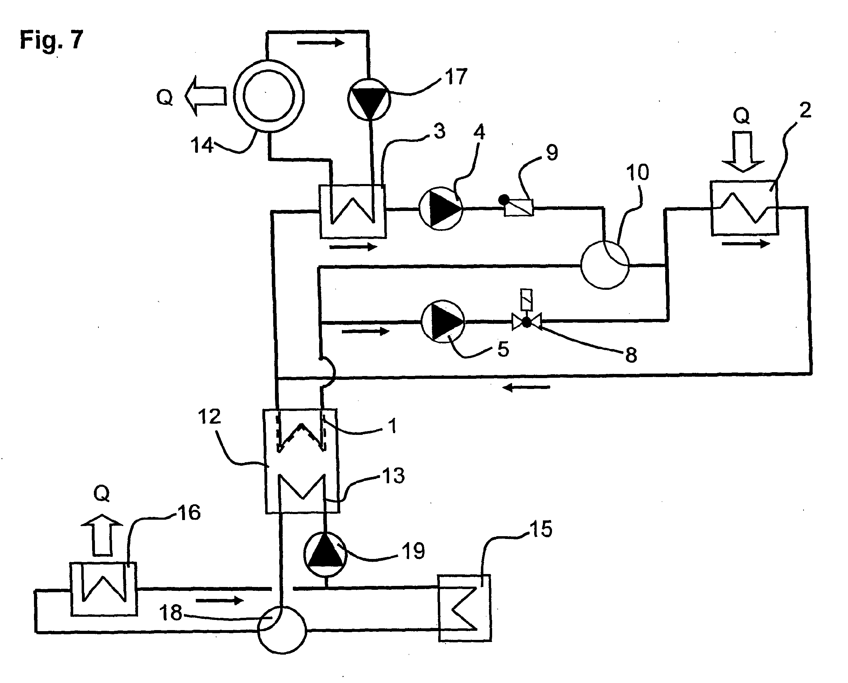

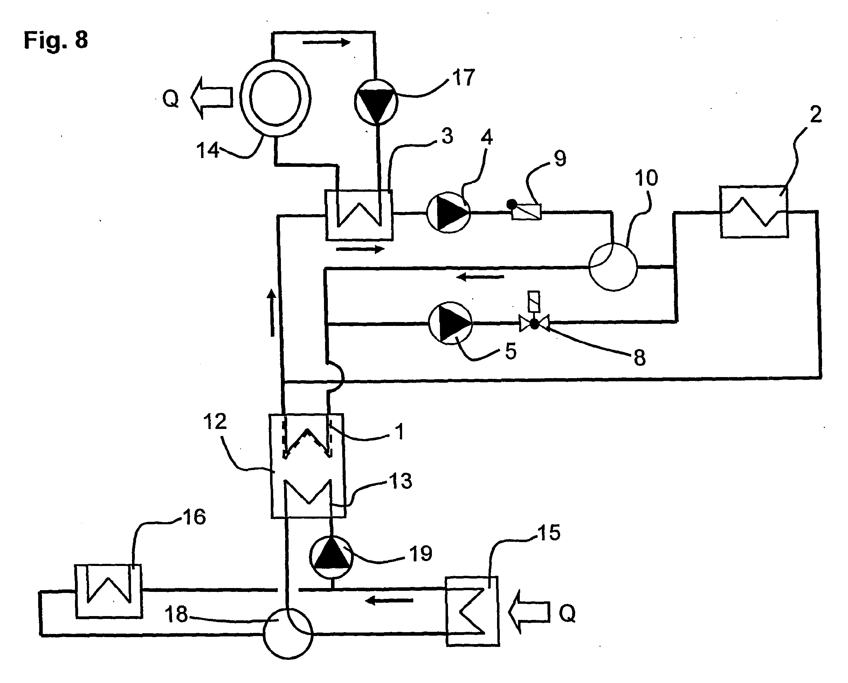

Die Figuren 7 bis 9 zeigen eine weitere Variante der erfindungsgemäßen Vorrichtung. Die Variante unterscheidet sich von den vorgenannten dadurch, dass zwei regelbare Pumpen 4, 5, ein Magnetventil 8 und ein Rückschlagventil 9 vorhanden sind.

In der Desorptionsphase gemäß Figur 7 wird das in der Wärmequelle 2 erhitzte Fluid einerseits durch den Adsorber/Desorber 1 und von diesem durch die regelbare Pumpe 5 sowie das geöffnete Magnetventil 8 wieder zu der Wärmequelle 2 gefördert. Andererseits wird ein Teilstrom über die Wärmesenke 3 und die regelbare Pumpe 4 sowie das Rückschlagventil 9 in Öffnungsrichtung über das Umschaltventil 10 zur Wärmequelle 2 gefördert. Durch die Wahl der Förderleistung der regelbaren Pumpen 4, 5 kann das Verhältnis zwischen Desorptionsleistung und Heizleistung auf die Wärmesenke 3 variiert werden. Bei der Adsorption wird das Magnetventil 8 geschlossen, sodass der Zweig, in dem sich die regelbare Pumpe 5 befindet, nicht mehr durchströmt wird. Das Umschaltventil 10 wird derart umgeschaltet, dass auch die Wärmequelle 2 nun nicht mehr durchströmbar ist. Somit ergibt sich ein kleiner Kreislauf aus Adsorber/Desorber 1, Wärmesenke 3, regelbarer Pumpe 4, Rückschlagventil 9, Umschaltventil 10, die seriell durchströmt werden.

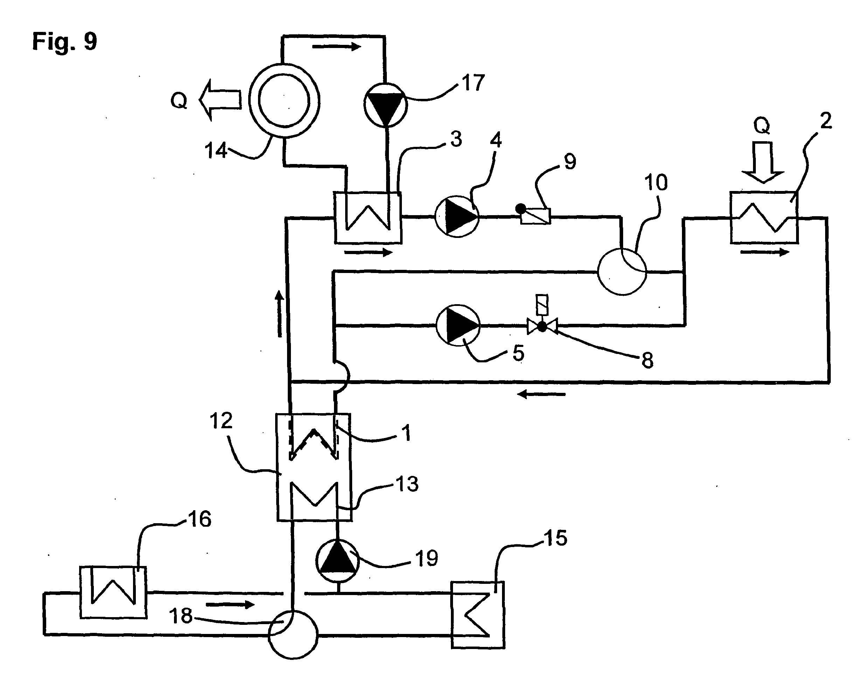

Im Direktheizbetrieb gemäß Figur 9 bleibt das Magnetventil 8 geschlossen, so dass dieser Leitungsbereich nicht durchströmt wird. Im Unterschied zur Adsorptionsschaltung wird das Umschaltventil 10 umgeschaltet, so dass die Wärmequelle 2 wieder durchströmt wird. In der Wärmequelle 2 wird das Fluid erhitzt und anschließend nicht über den Adsorber/Desorber 1 geleitet, da diese Leitung nicht weiter durchströmt wird. Vielmehr gelangt das erhitzte Fluid direkt zur Wärmesenke 3, durch die regelbare Pumpe 4, das Rückschlagventil 9 und das Umschaltventil 10 wieder zur Wärmequelle 2.

Bei allen Varianten ist es möglich, dass während der Desorptionsphase die Wärmesenke 3 nicht durchströmt wird, sondern vielmehr die gesamte Wärme, welche in der Wärmequelle 2 dem Fluid zugeführt wird, zur Desorption verwendet wird. In der Variante gemäß Figuren 7 bis 9 befindet sich daher ein Rückschlagventil 9 in der Leitung der Wärmesenke 3, um zu vermeiden, dass Fluid von der regelbaren Pumpe 5 über das Magnetventil 8 und das Umschaltventil 10 zurück zur Wärmesenke befördert wird. In einem derartigen Fall schlösse das Rückschlagventil 9 diesen Zweig ab.

Erfindungsgemäß können anstelle eines Adsorber/Desorbers 1 mehrere Adorber/Desorber 1 parallel geschaltet sein, wobei diese optional einzeln abgeschaltet und zugeschaltet werden können.

Soll die Wärmepumpe abgeschaltet werden, so endet der Betrieb der Wärmepumpe in allen Fällen mit Beendigung einer Adsorptionsphase. In der Adsorptionsphase nimmt der Adsorber/Desorber 1 Kältemittel auf. Nach dem Abschalten wird somit dem Adsorber/Desorber 1 keine Adsorptionswärme durch Aufnahme weiteren gasförmigen Kältemittels mehr frei. Die Adsorption muss nicht zwingend vollständig abgeschlossen sein, doch muss der Adsorber zumindest derart gesättigt sein, dass er nach dem Abschalten kein weiteres Kältemittel aufnimmt.

## Patentansprüche

1. Verfahren zum Betrieb einer Adsorptions-Wärmepumpe mit mindestens einer Wärmequelle (2) für die Desorption und einer Wärmesenke (3) zumindest für die Aufnahme der Adsorptionswärme, bei der die Wärmepumpe über genau ein oder mehrere im parallelen Arbeitstakt betriebene Wärmepumpen-Module (12), in denen sich zumindest ein Adsorber/Desorber (1) und ein Verdampfer/Kondensator (13) befinden, verfügt und die oder der Adsorber/Desorber (1) mit dem oder den Verdampfer/Kondensator (13) direkt miteinander in Verbindung treten, **dadurch gekennzeichnet, dass** das Abschalten der Wärmepumpe stets nach der Beendigung der Adsorption erfolgt.
